# EUROPEAN PATENT SPECIFICATION

(11) **EP 1 098 753 B1**
(45) Date of publication and mention of the grant of the patent: **19.02.2003**
(21) Application number: 98936910.3
(22) Date of filing: 17.07.1998
(51) Int. Cl.: B29D 30/46, B26D 1/04

(54) **METHOD AND APPARATUS FOR CUTTING TIRE PLY STOCK**
VERFAHREN SOWIE VORRICHTUNG ZUM SCHNEIDEN VON REIFENLAGEN
PROCEDE ET APPAREIL POUR DECOUPER UNE RESERVE DE NAPPE DE TOILE DE PNEUMATIQUE

(43) Date of publication of application: 16.05.2001
(73) Proprietor: THE GOODYEAR TIRE & RUBBER COMPANY, Akron, Ohio 44316-0001 (US)
(72) Inventor: RATKUS, Jeffery, Raymond, Greensboro, NC 27405 (US); CAILLET, Robert, Charles, Lawton, OK 73507 (US)
(74) Representative: Leitz, Paul
(86) International application number: US9814908
(87) International publication number: WO00003866

(56) References cited:
- EP-A- 0 125 148
- EP-A- 0 768 045
- DE-B- 1 282 914
- US-A- 3 365 992
- US-A- 4 131 996
- US-A- 4 545 275

## Description

### Technical Field

This invention pertains to methods and apparatus for cutting tire ply stock and the like.

### Background Art

Different apparatus and methods have been utilized in order to provide cut-to-length sections of ply stock used for building tires. In U.S. Patenl Nos. 3,429,490 and 3,641,855, apparatuses which utilize plunging knives are disclosed. In these apparatuses, a pair of knives is used to transpierce the ply stock at the center of the ply. Then each knife is moved to an opposite lateral edge of the ply stock. The cuts are made from the center outward in order to avoid crushing the lateral edges of the ply stock. A disadvantage of these apparatuses is that the two knives must cut between the same pair of adjacent cords.

In U.S. Patent No. 3,789,712 a single knife blade is used. The blade is moved into a first edge of the ply which is lifted from the conveyor up against a stock support and held there by the oblique cutting edge while the knife blade makes its cutting stroke. This is an attempt to cut the ply without plunging the knife or using two cutters. A disadvantage of this type of cutter is that the lateral edge of the ply stock is subjected to an inwardly directed cut and damage to the edge may occur.

U.S. Patent No. 4,156,378 discloses an apparatus which uses a circular rotatable disc cutter to engage a hard surface of an anvil and then roll on the surface to part the ply stock between a pair of cords. Again, the lateral edge is subjected to an inwardly directed cut.

The present invention provides a method and apparatus for severing ply stock between adjacent cords without the use of two separate knife blades in a way that does not damage lateral edges of the ply stock.

### Disclosure of Invention

In accordance with the practice of the present invention, there is provided a new and improved method and apparatus for severing a belt package and the like to a predetermined length at a desired bias angle which employs a heated knife blade to facilitate clean cutting of the belt package between adjacent cords.

According to one aspect of the invention there is provided a method for cutting from a first lateral edge to an opposite second lateral edge of a sheet of material with a knife assembly as defined in claim 1.

In accordance with another aspect of the invention there is provided a knife assembly for use in a cutting apparatus for cutting an associated ply stock along a cut line of an anvil said knife assembly including a blade having a cutting portion including a leading point, a leading edge and a trailing edge, knife assembly characterized by:
a. said leading edge of said blade including a concave portion adjacent said leading point for urging said ply stock towards anvil; and,
b. said trailing edge of said blade having a generally linear profile.

According to a further aspect of the invention there is provided a cutting apparatus for cutting an associated ply stock along a cut line between first and second lateral edges, apparatus comprising a knife assembly, means for moving knife assembly toward and away from ply stock, and means for traversing knife assembly between first and second lateral edges of ply stock, knife assembly including a blade having a cutting portion including a leading point, a leading edge and a trailing edge, trailing edge having an associated length, cutting apparatus being characterized by:
knife assembly having a home position wherein leading point of blade is directly above an insertion point of associated ply stock and wherein a distance between first lateral edge of associated ply stock and insertion point is less than or equal to associated length of trailing edge.

One advantage of the present invention is that the ply stock can be cut between adjacent cords without severing either cord.

Another advantage of the present invention is that the ply stock can be severed without damaging either lateral edge of the ply stock.

Still other benefits and advantages of the invention will become apparent to those skilled in the art upon a reading and understanding of the following specification.

### Brief Description of Drawings

The invention may take physical form in certain parts and arrangement of parts, a preferred embodiment of which will be described in detail in this specification and illustrated in the accompanying drawings wbicb form a part hereof and wherein:
Figure 1 is a front view of one embodiment of the present invention with the knife blade inserted into the ply stock and showing the knife assembly at the end of the cutting stroke in phantom lines.
Figure 2 is an enlarged view of the knife blade shown in Figure 1 prior to insertion of the knife blade.
Figure 3 is a side view in section of the embodiment taken along the line 3-3 of Figure 1.
Figure 4 is a side view of the knife blade shown in Figure 2 taken along line 4-4.
Figure 5 is a partial view like Figure 2 showing the knife blade after insertion through the ply stock.
Figure 6 is a top view of the slotted anvil shown in Figure 1.
Figure 7 is a cross-sectional view of the anvil taken along line 7-7 in Figure 6.
Figure 8 is a cross-sectional view of the ply stock showing the knife blade inserted between a pair of embedded cords.
Figure 9 is an enlarged view of the knife blade showing the configuration of the cutting edges of the blade.

### Detailed Description of the Invention

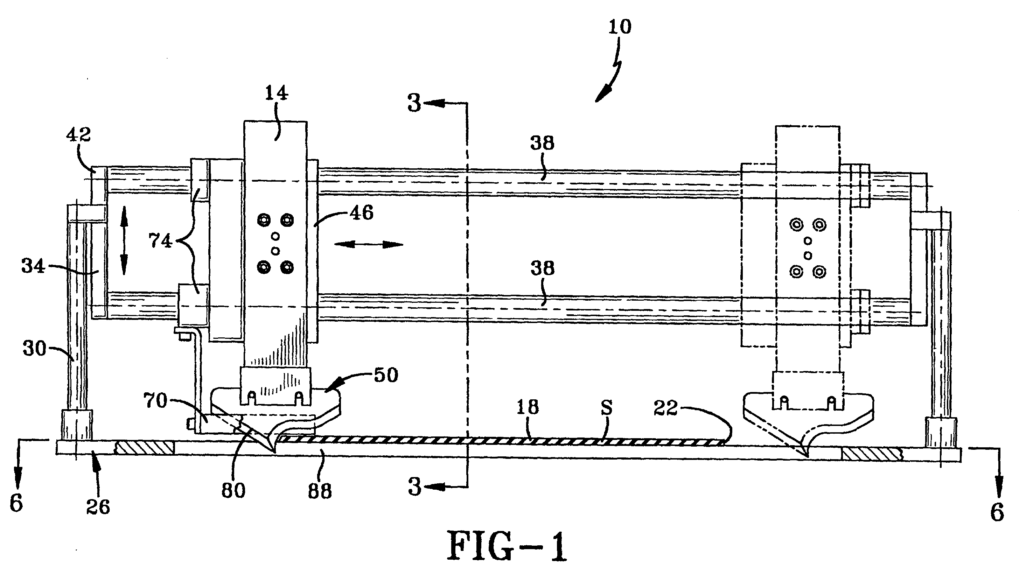

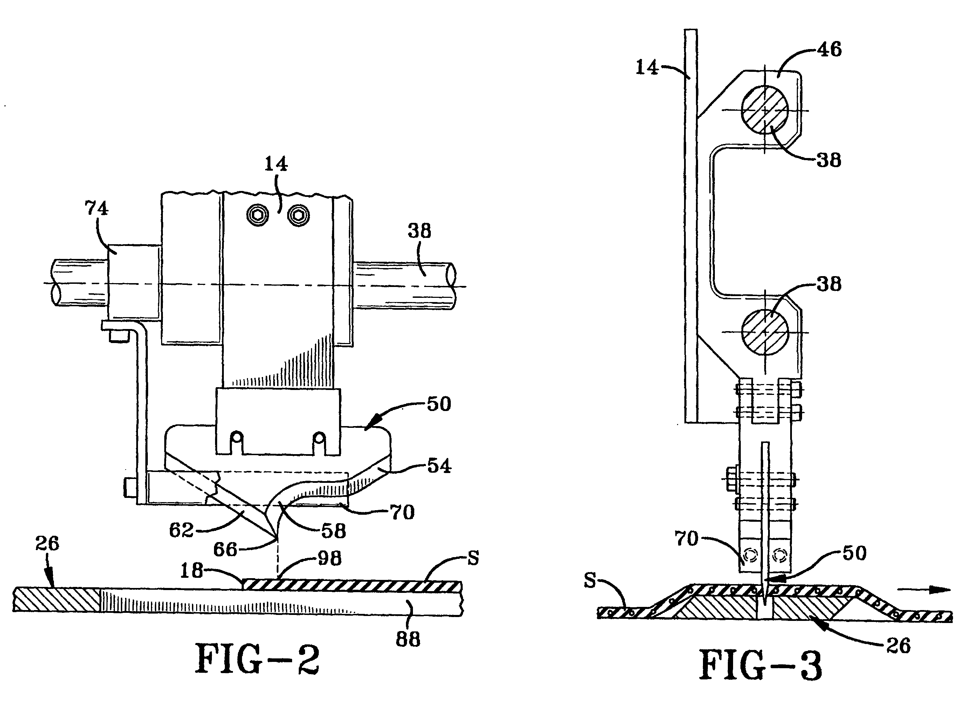

Referring now to the drawings wherein the showings are for purposes of illustrating a preferred embodiment of the invention only and not for purposes of limiting the same, Figure 1 shows an apparatus 10 for severing tire building sheet material, referred to herein as ply stock S. The apparatus 10 includes a knife assembly 14 which is mounted to means for moving the knife assembly toward and away from the ply stock to be cut. The apparatus 10 further includes means for moving the knife assembly 14 across the ply stock from a first lateral edge 18 thereof to a second lateral edge 22. The apparatus 10 also includes an anvil 26 for supporting the ply stock S in the immediate area below a cut line A-A. The embodiment of apparatus 10 is shown in Figures 1, 2, and 3 for illustrative purposes only and not by means of limiting the invention. In the preferred embodiment, the apparatus 10 includes a frame 30, an anvil 26, a carrier 34 including guide bars 38 extending between end support members 42, and a carriage 46. The carrier 34 is mounted on the frame 30 for movement toward and away from the anvil 26. The carriage 46 is mounted slidably along the bars 38 of the carrier 34 to traverse the knife assembly 14 between end members 42. A suitable mechanism (not shown), such as a pneumatic cylinder, may be provided for moving the canier 34 toward and away from the anvil 26. Likewise, a suitable mechanism, such as a chain drive (not shown) may be provided for traversing the carriage 46 along guide bars 38. The ply stock S to be severed may be supported and moved in the direction shown by the arrow in Figure 3 by any suitable conveyor (not shown). Preferably, the conveyor advances the ply stock S by successive predetermined increments thereby providing uniform lengths of ply stock suitable for their intended application. The relative positioning of the members of apparatus 10 just before a cut is made is referred to herein as "home position" 48 and is illustrated in Figure 2. At home position 48, the knife assembly 14 is positioned above the first lateral edge 18 of ply stock S.

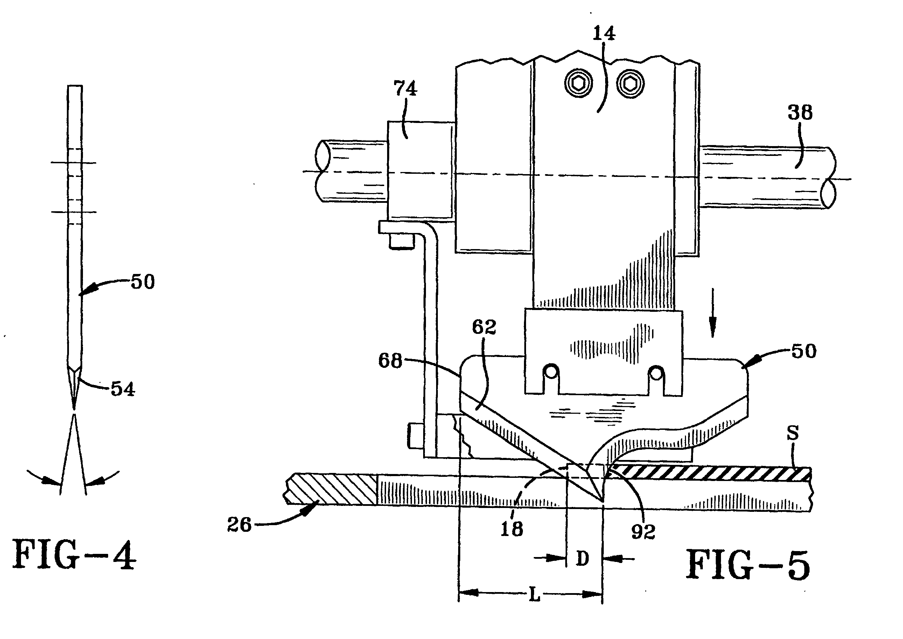

With reference to Figure 2, one embodiment of a knife assembly 14 according to the present invention is shown. The knife assembly 14 includes blade 50 having a cutting portion 54 including leading edge 58 and a trailing edge 62 which meet at leading point 66. Lending point 66 is used to penetrate the ply stock S upon downward movement of the knife assembly 14. In the proferred embodiment, the knife blade 50 is "hawk-billed" in shape with tho leading edge 58 being curved in profile as shown in Figure 2, and the trailing edge 62 presenting a straight profile. As best shown in Figure 4, the cutting portion 54 of the blade 50 is tapered to effectively cut ply stock S. Both the leading edge 58 and the trailing edge 62 are tapered in the preferred embodiment.

As shown in Figure 5, the trailing edge 62 of the knife blade 50 has a length. L, measured in a direction parallel to the direction of the blade traverse from leading point 66 to trailing end 68 that is equal to or greater than distance D from insertion point 92 to first lateral edge 18 of the ply stock S.

The preferred embodiment of the cutting apparatus 10 further includes means such as electric resistance heaters 70 for heating the knife blade 50 before each successive cutting operation. As shown in Figure 1, in the preferred embodiment, the heaters 70 are secured to carrier 34 and do not traverse the ply stock S. The heaters 70 are positioned so that when the carriage 46 is positioned against left spacers 74 on the guide bars 38, the knife blade 50 is adjacent heaters 70 to enable the blade 50 to be heated before each successive cut. In the preferred embodiment, heater 70 is bifurcated to beat both sides of blade 50.

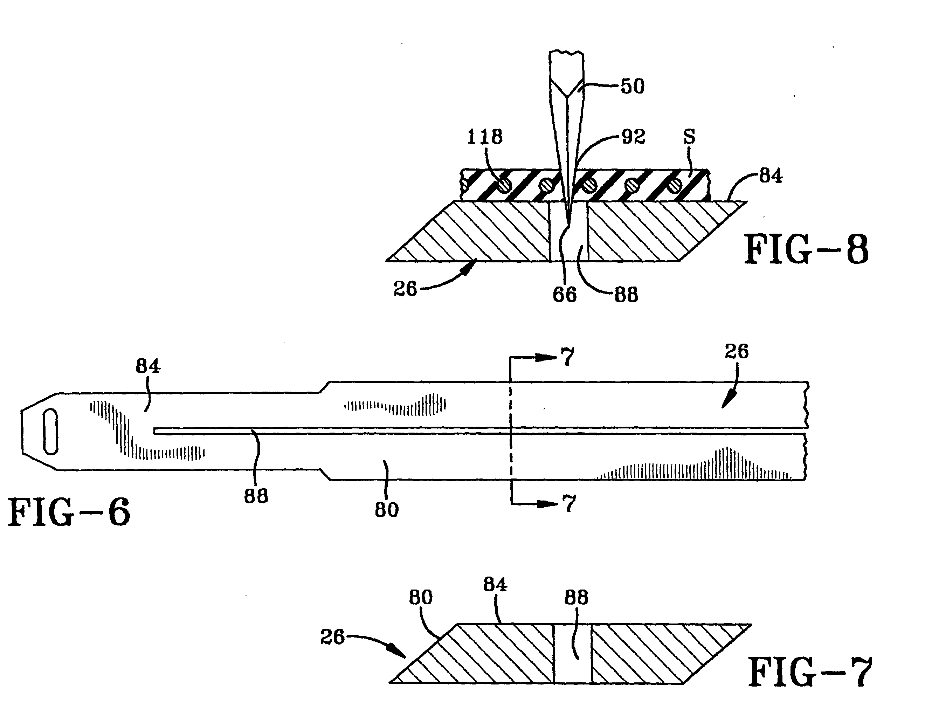

One embodiment of an anvil 26 for use with the present invention is shown in Figure 6 and Figure 7. The anvil 26 includes a sloping side 80 and support surface 84 having a slot 88 therein. During a cutting operation, the slot 88 is generally aligned with the cut line indicated by A-A in Figure 6.

The preferred method for cutting the ply stock S is set forth below. The ply stock S may include embedded cords 118. As shown in Figure 8, it is important that the ply stock S be cut between the adjacent cords 118 in a way that prevents exposing a bare cord or damaging either of the adjacent cords. It is also important that the lateral edges of the ply stock S be protected from damage which can occur when the lateral edge of the ply stock is crushed when the ply stock is cut from the outer edge inwardly. In operation, the ply stock S is positioned beneath the knife assembly 14. The ply stock S is supported in an area immediately adjacent the cut line by the support surface 84 of anvil 26. The slot 88 in the support surface 84 is aligned with the path the knife blade 50 will travel. The ply stock S is held in the cutting position by use of holding means such as a holding assembly (not shown). The knife blade 50 is pre-heated. The knife assembly 14 is then moved downwardly toward the ply stock S to bring the leading point 66 of the knife blade 50 into contact with the ply stock S. The heated knife blade 50 softens the ply stock S so that the leading point 66 of the knife blade may be plunged through the ply stock S at an insertion point 92 and into the slot 88. The insertion point 92 is located near a first lateral edge 18 of the ply stock S. On the downward stroke, as the knife blade 50 enters the ply stock S, the trailing edge 62 of the blade back-cuts the ply stock from the insertion point 92 to the first edge 18. The knife assembly 14 is then moved across the remaining width of the ply stock, while the leading edge 66 of the knife blade 50 severs the ply stock. The knife blade 50 cooperates with the slotted anvil 26 to perform the severing operation. Minor adjustments in the cord positioning during the cutting process is done by the action of the blade 50 within the slot 88 in order to prevent split cords. After the second lateral edge 22 is traversed, the knife assembly 14 is lifted away from the ply stock S. The cut length is then moved away from the anvil 26 in preparation for a successive cutting operation. The knife assembly 14 is returned to a "home" position 48 as shown in Figure 3 where the blade 50 is heated again before beginning the next cut

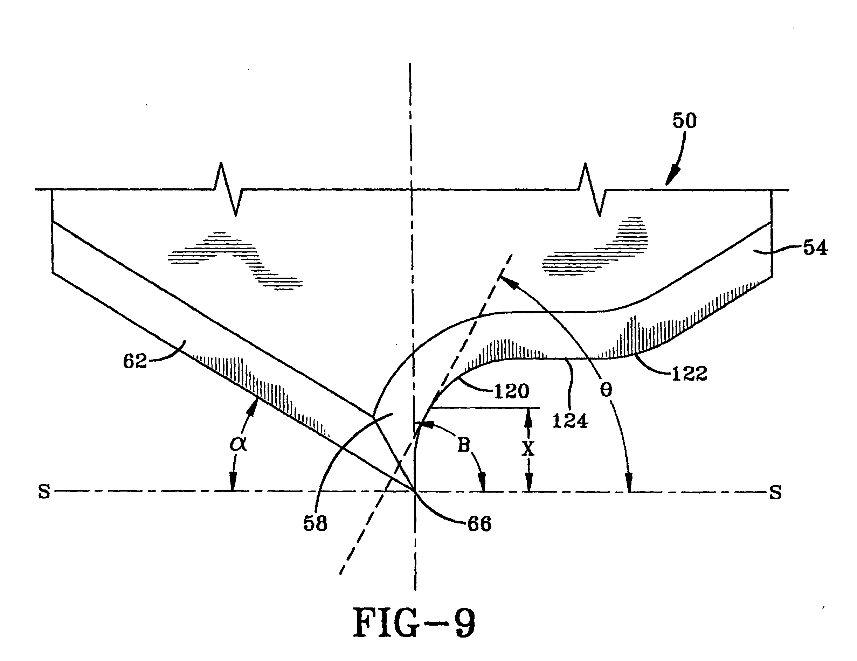

The preferred embodiment of the blade 50 is shown in Figure 9. There are several aspects of the preferred blade design which provide advantages over blades known in the art. For example, as the knife blade 50 is plunged into the ply stock S. the leading point 66 prevents movement of the blade 50 away from the lateral edge. The trailing edge 62 of the blade makes an angle a with the plane S-S of the ply stock S in order to back cut the ply stock from the insertion point to the first lateral edge. In the preferred embodiment, α is 30 degrees but may be in the range from 20 degrees to 40 degrees. The knife blade 50 is further characterized by the leading edge 58 having both a concave portion 120 and a convex portion 122 that meet at inflection point 124. The leading edge 58 makes an angle β with the plane S-S at the point of insertion which is preferably 90 degrees but may be from 70° to 90°. The leading edge 58 makes an angle θ with the plane S-S at a position X spaced from the plane of the ply stock S-S as shown in Fig. 9 a distance greater than the thickness of the ply stock so that as the knife assembly traverses the remaining width of the ply stock S, the curvature of the leading edge 58 acts to cut the ply stock S and urge the ply stock S toward the anvil 26. Preferably the angle θ is 60 degrees but may be in the range of 40 degrees to 70 degrees.

The preferred embodiments of the invention have been described, hereinabove. It will be apparent to those skilled in the art that the above method and upparatus may incorporate changes and modifications without departing from the general scope of this invention. It is intended to include all such modifications and alterations in so far as they come within the scope of the appended claims or the equivalents thereof. Having thus described the invention, it is now claimed:

## Claims

1. A method of cutting a sheet of material (S) from a first lateral edge (18) to an opposite second lateral edge (22) with a knife blade (50) **characterized by**:
a. plunging said knife blade (50) through said sheet (S) at a first position (92) spaced from said first edge (18),
b. continuing to plunge said knife blade (50) through said sheet (S) to cut said sheet (S) from said first position (92) to said first edge (18); and,
c. moving said knife blade (50) from said first position (92) to said second edge (22) to complete the cutting of said sheet from said one edge (18) to said opposite edge (22).

2. The method of claim 1 for cutting an associated ply stock (S) along a cut line using a cutting apparatus (10) comprising a knife assembly (14), means for moving said knife assembly (14) normally toward and away from said ply stock (S), and means for traversing said knife assembly (14) between said first lateral edge (18) and said second lateral edge (22) of said ply stock (5), said knife assembly (14) including said blade (50) having a cutting portion (54) including a leading point (66), a leading edge (58) and a trailing edge (62), said trailing edge (62) having an associated length (L), the method further **characterized by** the steps of:
a. moving said knife assembly (14) toward said ply stock (S) to insert the leading point (66) of said blade (50) into said ply stock (S) at said first position (92) spaced a distance (D) from said first lateral edge (18) wherein distance (D) is less than or equal to length (L) in order to back-cut said ply stock (S) from said insertion point (92) to said first lateral edge (22) with said trailing edge (62) of said blade (50); and,
b. traversing said knife assembly (14) across said ply stock (S) toward said second lateral edge (22) in order to cut said ply stock (S) from said first position (92) to said second lateral edge (22) with said leading edge (58) of said blade (50) and provide severance of said ply stock (S) from said first lateral edge (18) to said second lateral edge (22).

3. The method of claim 2 wherein the cutting apparatus (10) further includes an anvil (26) having a slot (88) in a support surface (84), said slot (88) being generally aligned with the cut line, the method further **characterized by** the steps of:
a. inserting said leading point (66) of said knife blade (50) into said slot (88) in said anvil (26) after inserting said leading point (66) into said ply stock (S); and,
b. maintaining said leading point (66) within said slot (88) while said knife assembly (14) traverses said ply stock (S).

4. The method of claim 2 wherein said cutting apparatus (10) further includes means for heating said knife blade (50), the method further **characterized by** the step of:
heating said knife blade (50) before inserting said leading edge (58) into said ply stock (S).

5. The method of claim 4 further **characterized by** the step of:
maintaining said heating means near said first lateral edge (18) of said ply stock (S) during the traversing of said knife assembly (14).

6. The method of claim 2 wherein said leading edge (58) of said knife blade (50) includes a concave cutting portion (120), the method further **characterized by**:
engaging said concave cutting portion (120) of said leading edge (58) with said ply stock (S) after inserting said leading point (66) into said ply stock (S).

7. A knife assembly (14) for use in a cutting apparatus for cutting an associated ply stock (S) along a cut line of an anvil (26), said knife assembly (14) including a blade (50) having a cutting portion (54) including a leading point (66), a leading edge (58) and a trailing edge (62), said knife assembly (14) **characterized by**:
a. said leading edge (58) of said blade (50) including a concave portion (120) adjacent said leading point (66) for urging said ply stock (S) towards said anvil (26); and,
b. said trailing edge (62) of said blade (50) having a generally linear profile.

8. The knife assembly (14) of claim 7 wherein said knife assembly (14) is further **characterized by**:
said leading edge (58) of said blade (50) including a convex portion (122), said convex portion (122) meeting said concave portion (120) at an inflection point (124).

9. A cutting apparatus (10) for cutting an associated ply stock (S) along a cut line between first (18) and second (22) lateral edges, said apparatus (10) comprising a knife assembly (14), means for moving said knife assembly (14) toward and away from said ply stock (S), and means for traversing said knife assembly (14) between said first (18) and second (22) lateral edges of said ply stock (S), said knife assembly (14) including a blade (50) having a cutting portion (54) including a leading point (66), a leading edge (58) and a trailing edge (62), said trailing edge (62) having an associated length (L), said cutting apparatus (10) being **characterized by**:
said knife assembly (14) having a home position (48) wherein said leading point (66) of said blade (50) is directly above an insertion point (92) of said associated ply stock (S) and wherein a distance (D) between said first lateral edge (18) of said associated ply stock (S) and said insertion point (92) is less than or equal to said associated length (L) of said trailing edge (62).

10. The cutting apparatus (10) of claim 9 further **characterized by**:
an anvil (26) positioned below said knife assembly (14) and having a slot (88) in a support surface (84), said slot (88) being generally aligned with said cut line.

## Patentansprüche

1. Verfahren zum Schneiden einer Materialbahn (S) von einer ersten Seitenkante (18) bis zu einer entgegengesetzten zweiten Seitenkante (22) mit einer Messerklinge (50), **dadurch gekennzeichnet, dass**:
a) die Messerklinge (50) durch die Bahn (S) an einer Stelle (92), die von der ersten Kante (18) beabstandet ist, hindurchgestochen wird,
b) fortgefahren wird, die Messerklinge (50) durch die Bahn (S) hindurchzustechen, um die Bahn (S) von der ersten Stelle (92) bis zur ersten Kante (18) zu schneiden, und
c) die Messerklinge (50) von der ersten Stelle (92) bis zur zweien Kante (22) bewegt wird, um das Schneiden der Bahn von der einen Kante (18) zur entgegengesetzten Kante (22) abzuschließen.

2. Verfahren nach Anspruch 1 zum Schneiden eines zugeordneten Lagenrohmaterials (S) entlang einer Schnittlinie unter Verwendung einer Schneidevorrichtung (10), die einen Messeraufbau (14), ein Mittel zum Bewegen des Messeraufbaus (14) normal auf das Lagenrohmaterial (S) zu und von diesem weg, und ein Mittel umfasst, um den Messeraufbau (14) quer zwischen der ersten Seitenkante (18) und der zweiten Seitenkante (22) des Lagenrohmaterials (5) hindurchzuführen, wobei der Messeraufbau (14) die Klinge (50) umfasst, die einen Schneideabschnitt (54) aufweist, der einen vorderen Punkt (66), eine vordere Kante (58) und eine hintere Kante (62) umfasst, wobei die hintere Kante (62) eine zugehörige Länge (L) aufweist, wobei das Verfahren ferner durch die Schritte gekennzeichnet ist, dass:
a) der Messeraufbau (14) auf das Lagenrohmaterial (S) zu bewegt wird, um den vorderen Punkt (66) der Klinge (50) in das Lagenrohmaterial (S) an der ersten Stelle (92), die mit einem Abstand (D) von der ersten Seitenkante (18) beabstandet ist, einzuführen, wobei der Abstand (D) kleiner oder gleich der Länge (L) ist, um das Lagenrohmaterial (S) von dem Einführungspunkt (92) zur ersten Seitenkante (22) mit der hinteren Kante (62) der Klinge (50) zurückzuschneiden, und
b) der Messeraufbau (14) quer durch das Lagenrohmaterial (S) auf die zweite Seitenkante zu (22) geführt wird, um das Lagenrohmaterial (S) von der ersten Stelle (92) bis zur zweiten Seitenkante (22) mit der vorderen Kante (58) der Klinge (50) zu schneiden und eine Trennung des Lagenrohmaterials (S) von der ersten Seitenkante (18) bis zur zweiten Seitenkante (22) vorzunehmen.

3. Verfahren nach Anspruch 2, wobei die Schneidevorrichtung (10) ferner einen Amboss (26) umfasst, der einen Schlitz (88) in einer Unterstützungsfläche (84) aufweist, wobei der Schlitz (88) im Allgemeinen mit der Schnittlinie ausgerichtet ist, wobei das Verfahren ferner durch die Schritte gekennzeichnet ist, dass:
a) der vordere Punkt (66) der Messerklinge (50) in den Schlitz (88) in dem Amboss (26) eingeführt wird, nachdem der vordere Punkt (66) in das Lagenrohmaterial (S) eingeführt worden ist, und
b) der vordere Punkt (66) innerhalb des Schlitzes (88) gehalten wird, während der Messeraufbau (14) das Lagenrohmaterial (S) durchquert.

4. Verfahren nach Anspruch 2, wobei die Schneidevorrichtung (10) ferner ein Mittel zum Erwärmen der Schneideklinge (50) umfasst, wobei das Verfahren ferner durch den Schritt gekennzeichnet ist, dass:
die Messerklinge (50) erwärmt wird, bevor die vordere Kante (58) in das Lagenrohmaterial (S) eingeführt wird.

5. Verfahren nach Anspruch 4, das ferner durch den Schritt gekennzeichnet ist, dass:
das Heizmittel während des Hindurchführens des Messeraufbaus (14) in der Nähe der ersten Seitenkante (18) des Lagenrohmaterials (S) gehalten wird.

6. Verfahren nach Anspruch 2, wobei die vordere Kante (58) der Messerklinge (50) einen konkaven Schneideabschnitt (120) umfasst, wobei das Verfahren ferner **dadurch gekennzeichnet ist, dass** der konkave Schneideabschnitt (120) der vorderen Kante (58) mit dem Lagenrohmaterial (S) in Eingriff gebracht wird, nachdem der vordere Punkt (66) in das Lagenrohmaterial (S) eingeführt worden ist.

7. Messeraufbau (14) zur Verwendung in einer Schneidevorrichtung zum Schneiden eines zugeordneten Lagenrohmaterials (S) entlang einer Schnittlinie eines Ambosses (26), wobei der Messeraufbau (14) eine Klinge (50) umfasst, die einen Schneideabschnitt (54) aufweist, der einen vorderen Punkt (66), eine vordere Kante (58) und eine hintere Kante (62) umfasst, wobei der Messeraufbau (14) **dadurch gekennzeichnet ist, dass**:
a) die vordere Kante (58) der Klinge (50) einen konkaven Abschnitt (120) neben dem vorderen Punkt (66) umfasst, um das Lagenrohmaterial (S) in Richtung des Ambosses (26) zu drängen, und
b) die hintere Kante (62) der Klinge (50) ein im Allgemeinen gerades Profil aufweist.

8. Messeraufbau (14) nach Anspruch 7, wobei der Messeraufbau (14) ferner **dadurch gekennzeichnet ist, dass**:
die vordere Kante (58) der Klinge (50) einen konvexen Abschnitt (122) umfasst, wobei der konvexe Abschnitt (122) den konkaven Abschnitt (120) an einem Wendepunkt (124) trifft.

9. Schneidevorrichtung (10) zum Schneiden eines zugeordneten Lagenrohmaterials (S) entlang einer Schnittlinie zwischen einer ersten (18) und einer zweiten (22) Seitenkante, wobei die Vorrichtung (10) einen Messeraufbau (14), ein Mittel zum Bewegen des Messeraufbaus (14) auf das Lagenrohmaterial (S) zu und von diesem weg und ein Mittel umfasst, um den Messeraufbau (14) quer zwischen der ersten (18) und der zweiten (22) Seitenkante des Lagenrohmaterials (S) hindurchzuführen, wobei der Messeraufbau (14) eine Klinge (50) umfasst, die einen Schneideabschnitt (54) aufweist, der einen vorderen Punkt (66), eine vordere Kante (58) und eine hintere Kante (62) umfasst, wobei die hintere Kante (62) eine zugehörige Länge (L) aufweist, und wobei die Schneidevorrichtung (10) **dadurch gekennzeichnet ist, dass**:
der Messeraufbau (14) eine Ausgangsstellung (48) aufweist, bei der der vordere Punkt (66) der Klinge (50) sich direkt oberhalb eines Einführungspunktes (92) des zugeordneten Lagenrohmaterials (S) befindet, und wobei ein Abstand (D) zwischen der ersten Seitenkante (18) des zugeordneten Lagenrohmaterials (S) und dem Einführungspunkt (92) kleiner oder gleich der zugehörigen Länge (L) der hinteren Kante (62) ist.

10. Schneidevorrichtung (10) nach Anspruch 9, die ferner **dadurch gekennzeichnet ist, dass**:
ein Amboss (26) unter dem Messeraufbau (14) angeordnet ist und
einen Schlitz (88) in einer Unterstützungsfläche (84) aufweist, wobei der Schlitz (88) im Allgemeinen mit der Schnittlinie ausgerichtet ist.

## Revendications

1. Procédé pour découper une feuille de matière (S) depuis un premier bord latéral (18) jusqu'à un deuxième bord latéral composé (22) à l'aide d'une lame coupante (50), **caractérisé par** le fait de :
a. insérer de ladite lame coupante (50) à travers ladite feuille à une première position (92) espacée dudit premier bord (18) ;
b. continuer à insérer ladite lame coupante (50) à travers ladite feuille (S) de façon à découper ladite feuille (S) depuis ladite première position (92) jusqu'audit premier bord (18) ;
c. déplacer ladite lame coupante (52) depuis ladite première position (92) jusqu'audit deuxième bord (22) pour compléter la découpe de ladite feuille (S) depuis ledit premier bord (18) jusqu'audit bord opposé (22).

2. Procédé selon la revendication 1, pour découper une matière de nappe associée (S) à travers une ligne de découpe en utilisant un appareil de découpe (10) comprenant un assemblage coupant (14), un moyen pour déplacer ledit assemblage coupant (14) en position perpendiculaire en direction et à l'écart de ladite matière de nappe (S), et un moyen pour permettre audit assemblage coupant (14) de traverser ladite matière de nappe (S) entre ledit premier bord latéral (18) et ledit deuxième bord latéral (22) de ladite matière de nappe (S), ledit assemblage coupant (14) englobant ladite lame (50) possédant une portion coupante (54) englobant une pointe avant (66), un bord avant (58) et un bord arrière (62), ledit bord arrière (62) possédant une longueur associée, le procédé étant en outre **caractérisé par** les étapes consistant à :
a. déplacer ledit assemblage coupant (14) en direction de ladite matière de nappe (S) dans le but d'insérer la pointe avant (66) de ladite lame (50) dans ladite matière de nappe (S) à ladite première position (92) espacée d'une distance (D) par rapport audit premier bord latéral (18), dans lequel la distance (D) est inférieure ou égale à la longueur (L) afin de soumettre à une découpe en retour ladite matière de nappe (S) depuis ladite position d'insertion (92) jusqu'audit premier bord latéral (22) avec ledit bord arrière (62) de ladite lame (50) ; et
b. traverser ladite matière de nappe (S) avec ledit assemblage coupant (14) en direction dudit deuxième bord latéral (22) dans le but de découper ladite matière de nappe (S) depuis ladite première position (92) jusqu'audit deuxième bord latéral (22) avec ledit bord avant (58) de ladite lame (50) et dans le but d'obtenir une séparation de ladite matière de nappe (S) depuis ledit premier bord latéral (18) jusqu'audit deuxième bord latéral (22).

3. Procédé selon la revendication 2, dans lequel l'appareil de découpe (10) englobe en outre une enclume (26) comportant une fente (88) pratiquée dans la surface de support (84), ladite fente (88) étant en général disposée en alignement avec la ligne de découpe, le procédé étant en outre **caractérisé par** les étapes consistant à :
a. insérer ladite pointe avant (66) de ladite lame coupante (50) dans ladite fente (88) pratiquée dans ladite enclume (26) après avoir inséré ladite pointe avant (66) dans ladite matière de nappe (S) ; et
b. maintenir ladite pointe avant (66) à l'intérieur de ladite fente (88) tandis que ledit assemblage coupant (14) traverse ladite matière de nappe (S).

4. Procédé selon la revendication 2, dans lequel ledit appareil de découpe (10) englobe en outre un moyen pour chauffer ladite lame coupante (50), le procédé étant **caractérisé en outre par** l'étape consistant à :
chauffer ladite lame coupante (50) avant l'insertion dudit bord avant (58) dans ladite matière de nappe (S).

5. Procédé selon la revendication 4, **caractérisé en outre par** l'étape consistant à :
maintenir ledit moyen de chauffage à proximité dudit premier bord latéral (18) de ladite matière de nappe (S) lors de la traverser dudit assemblage coupant (14).

6. Procédé selon la revendication 2, dans lequel ledit bord avant (58) de ladite lame coupante 50 englobe une portion de découpe concave (120), le procédé étant en outre **caractérisé par** le fait de :
mettre en contact ladite portion de découpe concave (120) dudit bord avant (58) avec ladite matière de nappe (S) après l'insertion de ladite pointe avant (66) dans ladite matière de nappe (S).

7. Assemblage coupant (14) à utiliser dans un appareil de découpe pour découper une matière de nappe associée (S) le long d'une ligne de découpe d'une enclume (26), ledit assemblage coupant (14) englobant une lame (50) possédant une portion de découpe (54) englobant une pointe avant (66), un bord avant (58) et un bord arrière (62), ledit assemblage coupant (14) étant **caractérisé par le fait que** :
a. ledit bord avant (58) de ladite lame (50) englobe une portion concave (120) en position adjacente à ladite pointe avant (66) pour presser ladite matière de nappe en direction de ladite enclume (26) ; et
b. ledit bord arrière (62) de ladite lame (50) possède un profil généralement linéaire.

8. Assemblage coupant (14) selon la revendication 7, dans lequel ledit assemblage coupant (14) est **caractérisé en outre par le fait que** :
ledit bord avant (58) de ladite lame (50) englobe une portion convexe (122), ladite portion convexe (122) rencontrant ladite portion concave (120) à un point d'inflexion (124).

9. Appareil de découpe (10) pour découper une matière de nappe associée (S) le long d'une ligne de découpe entre un premier bord latéral (18) et un deuxième bord latéral (22), ledit appareil (10) comprenant un assemblage coupant (14), un moyen pour déplacer ledit assemblage coupant (14) en direction et à l'écart de ladite matière de nappe (S), et un moyen pour permettre audit assemblage coupant (14) de traverser ladite matière de nappe (S) entre ledit premier bord latéral (18) et ledit deuxième bord latéral (22) de ladite matière de nappe (S), ledit assemblage coupant (14) englobant une lame (50) possédant une portion de découpe (54) englobant une pointe avant (66), un bord avant (58) et un bord arrière (62), ledit bord arrière (62) possédant une longueur associée (L), ledit appareil de découpe (10) étant **caractérisé par le fait que** :
ledit assemblage coupant (14) possède une position de repos (48) dans laquelle ladite pointe avant (66) de ladite lame (50) est disposée directement au-dessus d'un un endroit d'insertion (92) de ladite matière de nappe associée (S) et dans laquelle la distance (D) s'étendant entre ledit premier bord latéral (18) de ladite matière de nappe associée (S) et ledit endroit d'insertion (92) est inférieure ou égale à ladite longueur associée (L) dudit bord arrière (62).

10. Appareil de découpe (10) selon la revendication 9, **caractérisé en outre par le fait que** :
une enclume (26) est positionnée en dessous dudit assemblage coupant (14) et comporte une fente (88) pratiquée dans la surface de support (84), ladite fente (88) étant généralement disposée en alignement avec ladite ligne de découpe.
